# EUROPEAN PATENT SPECIFICATION

(11) **EP 3 884 199 B1**
(45) Date of publication and mention of the grant of the patent: **07.06.2023**
(21) Application number: 19818256.0
(22) Date of filing: 18.11.2019
(51) Int. Cl.: F16L 39/04, F16L 47/18

(54) **MULTIPATH FLUIDIC ROTARY DISTRIBUTOR**
MEHRWEGDREHDURCHFÜHRUNG
DISTRIBUTEUR DE FLUIDE ROTATIF À PASSAGES MULTIPLES

(30) Priority: 21.11.2018 IT 201800010474
(43) Date of publication of application: 29.09.2021
(73) Proprietor: Ala Officine S.p.A., 25010 Pozzolengo (BS) (IT)
(72) Inventor: SEGNA, Simone, 25010 Pozzolengo (IT); ZUIN, Paolo, 25010 Pozzolengo (IT); RAMORINO, Giorgio, 25010 Pozzolengo (IT)
(74) Representative: Postiglione, Ferruccio
(86) International application number: PCT/IB2019/059894
(87) International publication number: WO 2020/104920

(56) References cited:
- EP-A1- 3 093 084
- WO-A1-2015/155627
- DE-A1- 10 202 794
- US-A1- 2008 061 514

## Description

The present invention relates to a multi-pass fluidic distributor or rotary joint.

The subject invention is used in rotating plants and rotating operating machines, such as for example earthmoving machines, cranes, platforms, machine tools and the like, to which the following description will make explicit reference without thereby losing its generality, having parts which rotate or oscillate around an axis with a movement at will and where one or more lines of fluid must be transmitted continuously and independently from a static part to a rotating part.

In general, an operating machine provided with parts that rotate or oscillate around an axis with a movement at will is normally provided with one or more fluidic rotary distributors designed to allow the transmission of pressurized fluids between operating parts.

Such fluidic rotary distributors can have one or more circulation lines of one or more fluids in a continuous and independent way, from a static part to a rotating part. Normally they are made of an internal stem typically made of carbon steel and provided with inner longitudinal axial holes (also called channels) each adapted to define a relative cited line of circulation of the fluid placed in communication with a respective circular chamber obtained in the outer jacket, generally made of phosphate steel or spheroid cast iron, which is able to support and enclose the inner stem in a rotary manner and is provided with connections, each of which is in direct communication with a tank or with other facilities placed in the machine/rotating plant.

The aforementioned circular chambers of the outer jacket are separated from each other by a series of gaskets which guarantee the tightening of the fluid between the chambers themselves and also allow the creeping between the inner stem and the outer jacket with the minimum possible friction.

A closing element defined by a steel bottom/plate or by a Seeger ring is adapted to close the rotary distributor, which can also be provided with other additional components, such as for example anti-seize and/or protective rings, guide strips, ball or roller bearings and electric manifolds.

The fluidic rotary distributors of the known type described above are currently subject to some considerable drawbacks, such as for example the high degree of wear of their main structural components, their considerable weight, as well as the production cost mainly attributable to the materials that must necessarily be used for their realization.

It should be noted, in fact, that in US-2008/061514-A a series of mechanical seals are particularly described which when combined allow a plurality of passages from fixed to rotary part (rotary joint), the focus of this patent being the geometric construction and the materials used for the rotary seals that can be made of steel or any other polymeric material. These mechanical seals are made of PEEK or PTFE. However, the document does not describe that the rotary joint being able to support high working pressures of the fluids that pass through it and greater than 50 bar.

As regards document EP 093 084 A1, it indicates as its main purpose to create a fluidic rotary joint with a technology to reduce costs and production times. This technology consists of creating the passage channels with bent metal tubes in various lengths and the remaining space filled with various materials made of cast aluminum (aluminum alloys) or molded with plastic/ polymeric materials. In this way, the internal stem does not have to be drilled to create the ducts since they are made up of tubes. The seals between one channel and the other are made of polymeric material, as well as other possible accessory elements.

Also in this case, the document does not describe a rotating fluidic joint in which the realization of the entire structural element such as the outer jacket or the inner stem in polymeric material, said structural element being able to support high working pressures of the fluids which they cross it over 50 bar.

Finally, as regards to documents WO2015/155627 and DE10202794 A1, they describe rotary joints with polymer sealing elements, in the first case between one channel and the other, while in the second case where the sealing elements can also act as guide elements and are housed or cast or such, in grooves of the internal or external body becoming integral with each other.

Therefore also in this case the document does not describe a rotating fluidic joint in which the realization of the entire structural element such as the outer jacket or the internal stem in polymeric material, said structural element being able to support high working pressures of the fluids that cross it over 50 bar.

The scope of the present invention is to overcome the aforementioned technical drawbacks.

In particular, a scope of the present invention is to provide a rotary distributor, suitable for being traversed by high-pressure fluids, such as hydraulic oil or the like, with working pressure above 50 bar, as well as fluids such as water and/or fluids for pneumatic applications, with working pressures higher than 10 bar, said distributor having a long service life and considerably reduced production costs.

A further object of the present invention is to provide a rotary distributor which allows to obtain a high reduction in its own weight, ensuring performance and durability of the operating machines on which it is mounted.

These objects are achieved by the present invention as defined in claim 1.

The structural and functional characteristics of the present invention and the its advantages over the known art will be clearer and more evident from the underlying claims, and in particular from an examination of the description that follows, referring to the accompanying drawings, which show the schematization of a preferred but not limiting embodiment of a multi-pass fluidic rotary distributor, in which:
- Figure 1 is a perspective view of a preferred embodiment of a fluidic rotary distributor according to the present invention;
- Figure 2 is an exploded view of the rotary distributor of Figure 1;

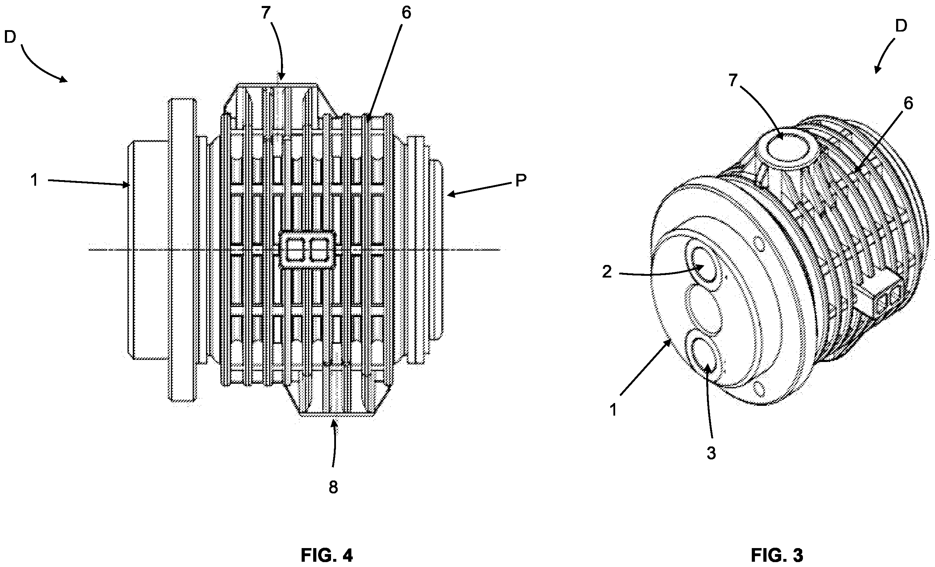

- Figure 3 is another perspective view of the fluidic rotary distributor of Figure 1;
- Figure 4 shows the fluidic rotary distributor of Figure 1 in a front view and on an enlarged scale;
- Figure 5 shows the fluidic rotary distributor of Figure 1 in a side view and on an enlarged scale;
- Figure 6 shows the fluidic rotary distributor of Figure 5 according to the cross-section AA ;
- Figure 7 shows the "Endurance Test" diagram of the distributor according to the invention;
- Figure 8 shows the "Burst test" diagram of the distributor according to the invention.

With reference to the accompanying figures, D is globally indicated as a multi-passage fluidic rotary distributor adapted to be advantageously, preferably but not limitedly, used in machinery and operating equipment (known and not illustrated) such as for example earthmoving machines, cranes, platforms, machine tools and the like.

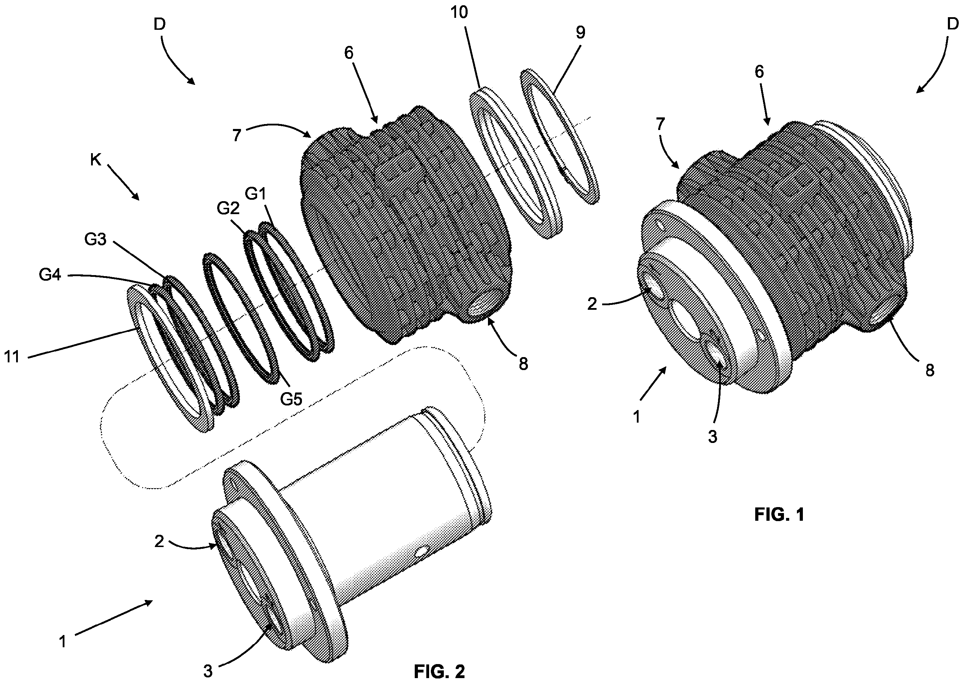

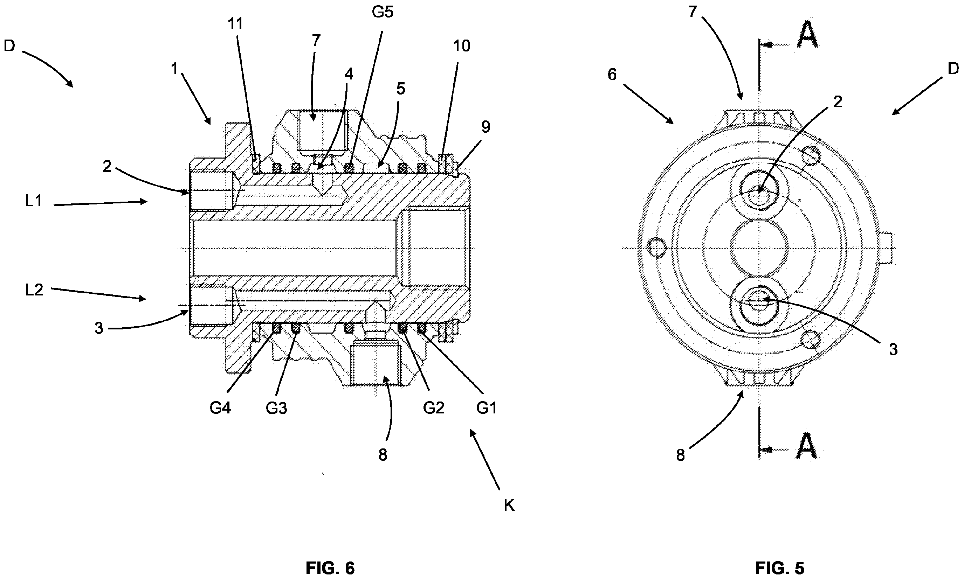

According to what is best illustrated in Figures 1, 2, 5 and 6, the distributor D comprises an inner stem 1 provided with two cylindrical inner axial channels 2 and 3, sealed and able to define two circulation lines of pressurized oil placed in communication, in use, with a respective substantially transverse semi-cylindrical circular chamber 4, 5 formed on an outer jacket 6.

The outer jacket 6 is able to rotary support and internally enclose the inner stem 1 and it is provided with two ducts 7 and 8, each of which ducts 7, 8 is driven in communication externally with a reservoir (known and not shown) or with other facilities, externally located (for example on the frame of the operating machine) and it is also placed in communication with a respective circular chamber 4, 5 of the outer jacket 6 itself.

The circular chambers 4 and 5 of the outer jacket 6 are mutually separated from each other by K-series of ring seals mounted on the outer jacket 6 which guarantee the seal of the fluid between the chambers 4 and 5 themselves and also allow the sliding between the inner stem 1 and the outer shirt 6.

The aforementioned K series comprises two pairs of outer lateral gaskets G1, G2 and G3, G4 arranged on both sides of the aforementioned chambers 4 and 5, and an inner ring-shaped intermediate gasket G5 arranged between the chamber 4 and the chamber 5.

There are also a seeger stop ring 9, and anti-seize rings 10 and 11.

A closure element defined by a seeger ring or by a plate P fixed to the inner stem 1 by means of screws is adapted to close the rotary distributor D.

Specifically, at least the outer jacket 6 and/or the inner stem 1 are advantageously made (for example by molding or equivalent techniques) made of polymeric material or light equivalent material, highly resistant to high operating pressures and durable.

In particular, the aforementioned polymeric material is expressly and advantageously selected from one or more of the following materials, optionally added with mineral fillers capable of reinforcing the polymeric material, or capable of improving the characteristics of the product, such as mechanical characteristics (breaking elongation, breaking load, hardness), thermal (dimensional stability under heat, resistance to heat and flame) physical (density):
PPSU Polyphenylsulfone)
- PA: Polyamide 6
- PA: Polyamide 66
- PA: Polyamide 11
- PA: Polyamide 12
- PPA: Poliphthalamide
- PPS: Polyphenylene sulfide
- PEEK: Polyether ether ketone
- PEI: Polyethylenimine
- PBT: Polybutylene terephthalate
- PVDF: Polyvinylidenfluoride

- PET: Polyethylene terephtalate
- PPO: Polyphenylene oxide
- PPE: Polyphenylene ether
- PES: Polyethersulfone
more preferably the polymeric material comprises one or more of the following components:
PPSU Polyphenylsulfone, PA Polyamide 6, PA Polyamide 66, PA Polyamide 11, PA Polyamide 12, PPA Polifhalamide, PPS Polyphenylene sulphide.

It is specified that the preferred mineral fillers are made of glass and/or carbon fibers.

In this way, the distributor D thus realized and obtained has considerably reduced production costs but it is able to withstand the working cycles of fluids at high pressures, and is therefore able to guarantee a high efficiency and durability of the operating machines on which it is mounted.

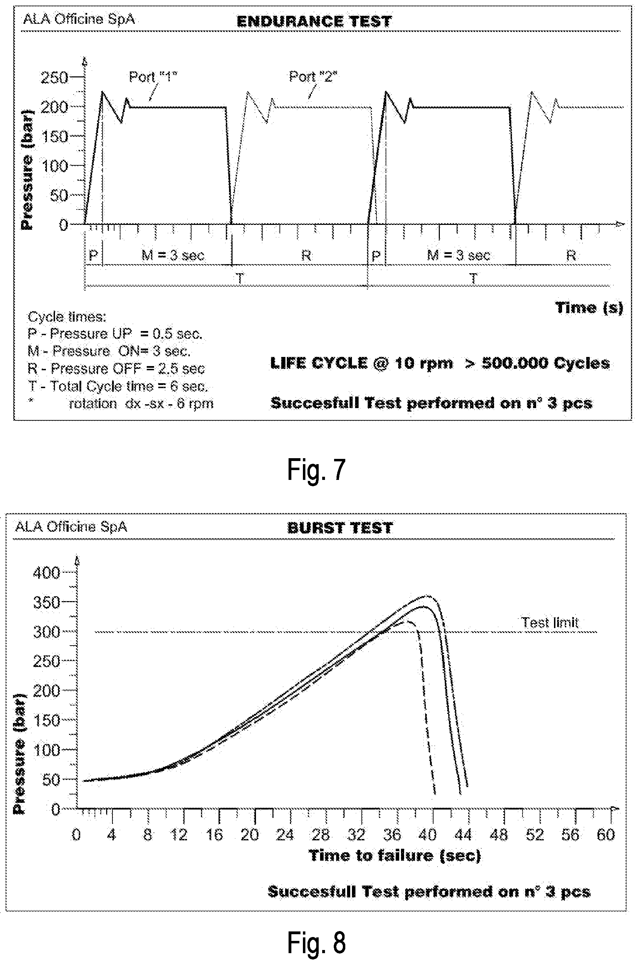

Fig. 7 in fact, as an "ENDURANCE TEST" represents the pressure cycle to which no. 3 samples made with PPSU polymer and without any mineral filler have undergone.

On the abscissa axis (X axis) the time "T" in seconds is indicated and on the ordinate axis "Y axis" the working pressure is indicated.

The samples were dynamically stressed in a first mouth called "mouth 1" for 3 seconds with a pressure of 200 bar and for 3 seconds of discharge. The same pressure is applied in a second mouth called "mouth 2" with a staggered cycle of 3 seconds, and in this way the component is stressed alternately. The total duration of each mouth cycle is 6 seconds. The test is repeated for 500,000 cycles of 6 seconds for a total of 833 hours. The test is passed when the total 500,000 cycles are reached.

Fig. 8 as a "BURST TEST" represents the burst test.

On the abscissa axis (X axis) is the time "T" in seconds is indicated and on the ordinates axis "Y axis" the pressure is indicated.

The sample also made of PPSU without mineral fillers, is statically pressurized, so increasing the pressure gradually by 100 bar every 10 seconds.

The test was positive as the limit pressure value of 300 bar was exceeded.

The graphs of Figures 7 and 8 thus demonstrate how the object of the present patent can be destined to be used with high pressure fluids, therefore with working pressures higher than 50 bar, by reaching robustness performances comparable to the rotating fluidic distributors of the known art made of steel, but with significantly reduced production costs.

## Claims

1. Multi-pass fluidic rotary distributor (D) comprising:
an inner stem (1) provided with axial channeling means (2, 3) and at least one line (L1, L2) for circulating a fluid under pressure,
an outer jacket (6) made in one piece, said channeling means (2, 3) being placed in communication with chamber means (4, 5) formed on the outer jacket (6), said outer jacket (6) being adapted to support and enclose coaxially to its interior and in a rotary way said inner stem (1) and being provided with duct means (7, 8) placed externally in communication with tank means or other facilities of said fluid;
sealing means (K) being mounted on said outer jacket (6) for sealing said fluid in said chamber means (4, 5) and closing means (P) of said distributor (D) ;
wherein said multi-pass fluidic rotary distributor is for a working pressure higher that 50 bar;
**characterized in that**: said outer jacket (6) is made of a polymeric material.

2. Rotary distributor according to claim 1, **characterized in that** said inner stem (1) is made of a polymeric material.

3. Rotary distributor according to any one of the preceding claims, **characterized in that** said polymeric material comprises one or more of the following: Polyphenylsulfone, Polyamide 6, Polyamide 66, Polyamide 11, Polyamide 12, Polyphthalamide, Polyphenylene sulfide, Polyether ether ketone, Polyetherimide, Polybutylene terephthalate, Polyvinylidene fluoride, Polyethylene terephthalate, Polyphenylene oxide, Polyphenylene sulfone.

4. Rotary distributor according to any one of the preceding claims, **characterized in that** said polymeric material preferably comprises one or more of the following components:
Polyphenylsulfone, Polyamide 6, Polyamide 66, Polyamide 11, Polyamide 12, Polyphalalamide, Polyphenylene Sulphide.

5. Rotary distributor according to one or more of the preceding claims, **characterized in that** said polymeric material is added with mineral fillers.

6. Rotary distributor according to one or more of the preceding claims, **characterized in that** said polymeric material is added with glass fiber and/or carbon fiber.

7. Rotary distributor according to one or more of the preceding claims, **characterized in that** said rotary distributor (D) can have one or more passage lines separated by intermediate ring seals (G5).

8. Operating machine or other rotating plant comprising a fluidic rotary distributor according to one or more of the previous claims 1 to 7.

## Patentansprüche

1. Mehrwegedrehdurchführung (D) mit:
Einem inneren Schaft (1), der mit axialen Kanalisierungsmitteln (2, 3) und mindestens einer Leitung (L1, L2) für die Zirkulation eines unter Druck stehenden Fluids versehen ist, einem äußeren Mantel (6), der aus einem Stück hergestellt ist, wobei die Kanalisierungsmittel (2, 3) in Verbindung mit Kammermitteln (4, 5) stehen, die auf dem äußeren Mantel (6) ausgebildet sind, wobei der Außenmantel (6) geeignet ist, den inneren Schaft (1) koaxial zu seinem Inneren und drehbar zu tragen und zu umschließen, und mit Leitungsmitteln (7, 8) versehen ist, die außen in Verbindung mit Tankmitteln oder anderen Einrichtungen für das Fluid angeordnet sind;
Dichtungsmittel (K), die an dem äußeren Mantel (6) angebracht sind, um das Fluid in den Kammermitteln (4, 5) und den Verschlussmitteln (P) der Mehrwegedrehdurchführung (D) abzudichten;
wobei die Mehrwegedrehdurchführung für einen Arbeitsdruck von mehr als 50 bar ausgelegt ist;
**dadurch gekennzeichnet, dass** der äußere Mantel (6) aus einem polymeren Material besteht.

2. Mehrwegedrehdurchführung nach Anspruch 1, **dadurch gekennzeichnet, dass** der innere Schaft (1) aus einem polymeren Material hergestellt ist.

3. Mehrwegedrehdurchführung nach einem der vorhergehenden Ansprüche, **dadurch gekennzeichnet, dass** das polymere Material eines oder mehrere der folgenden Materialien umfasst:
Polyphenylsulfon, Polyamid 6, Polyamid 66, Polyamid 11, Polyamid 12, Polyphthalamid, Polyphenylensulfid, Polyetheretherketon, Polyetherimid, Polybutylenterephthalat, Polyvinylidenfluorid, Polyethylenterephthalat, Polyphenylenoxid, Polyphenylensulfon.

4. Mehrwegedrehdurchführung nach einem der vorhergehenden Ansprüche, **dadurch gekennzeichnet, dass** das polymere Material vorzugsweise eine oder mehrere der folgenden Komponenten umfasst:
Polyphenylsulfon, Polyamid 6, Polyamid 66, Polyamid 11, Polyamid 12, Polyphalalamid, Polyphenylensulfid.

5. Mehrwegedrehdurchführung nach einem oder mehreren der vorhergehenden Ansprüche, **dadurch gekennzeichnet, dass** dem polymeren Material mineralische Füllstoffe zugesetzt sind.

6. Mehrwegedrehdurchführung nach einem oder mehreren der vorhergehenden Ansprüche, **dadurch gekennzeichnet, dass** dem polymeren Material Glasfasern und/oder Kohlenstofffasern zugesetzt sind.

7. Mehrwegedrehdurchführung nach einem oder mehreren der vorhergehenden Ansprüche, **dadurch gekennzeichnet, dass** der Mehrwegedrehdurchführung (D) eine oder mehrere durch Zwischenringdichtungen (G5) getrennte Durchgangsleitungen aufweisen kann.

8. Arbeitsmaschine oder sonstige rotierende Anlage mit einer Mehrwegedrehdurchführung nach einem oder mehreren der vorhergehenden Ansprüche 1 bis 7.

## Revendications

1. - Distributeur rotatif fluidique à multiples passages (D) comprenant :
une tige intérieure (1) comportant des moyens de canalisation axiaux (2, 3) et au moins une conduite (LI, L2) pour faire circuler un fluide sous pression,
une enveloppe extérieure (6) faite d'une seule pièce, lesdits moyens de canalisation (2, 3) étant placés en communication avec des moyens de chambre (4, 5) formés sur l'enveloppe extérieure (6), ladite enveloppe extérieure (6) étant apte à supporter et enfermer coaxialement en son intérieur et d'une manière rotative ladite tige intérieure (1) et comportant des moyens de conduit (7, 8) placés à l'extérieur en communication avec des moyens de réservoir ou d'autres installations dudit fluide ;
des moyens d'étanchéité (K) montés sur ladite enveloppe extérieure (6) pour sceller ledit fluide dans lesdits moyens de chambre (4, 5) et des moyens de fermeture (P) dudit distributeur (D) ;
ledit distributeur rotatif fluidique à multiples passages étant destiné à une pression de travail supérieure à 50 bars ;
**caractérisé par le fait que** : ladite enveloppe extérieure (6) est faite d'un matériau polymère.

2. - Distributeur rotatif selon la revendication 1, **caractérisé par le fait que** ladite tige intérieure (1) est faite d'un matériau polymère.

3. - Distributeur rotatif selon l'une quelconque des revendications précédentes, **caractérisé par le fait que** ledit matériau polymère comprend un ou plusieurs de ce qui suit :
polyphénylsulfone, polyamide 6, polyamide 66, polyamide 11, polyamide 12, polyphtalamide, poly(sulfure de phénylène), polyétheréthercétone, polyétherimide, poly(téréphtalate de butylène), poly(fluorure de vinylidène), poly(téréphtalate d'éthylène), poly(oxyde de phénylène), polyphénylène sulfone.

4. - Distributeur rotatif selon l'une quelconque des revendications précédentes, **caractérisé par le fait que** ledit matériau polymère comprend de préférence un ou plusieurs des composants suivants :
polyphénylsulfone, polyamide 6, polyamide 66, polyamide 11, polyamide 12, polyphalalamide, poly(sulfure de phénylène).

5. - Distributeur rotatif selon une ou plusieurs des revendications précédentes, **caractérisé par le fait que** ledit matériau polymère est additionné de charges minérales.

6. - Distributeur rotatif selon une ou plusieurs des revendications précédentes, **caractérisé par le fait que** ledit matériau polymère est additionné de fibre de verre et/ou de fibre de carbone.

7. - Distributeur rotatif selon une ou plusieurs des revendications précédentes, **caractérisé par le fait que** ledit distributeur rotatif (D) peut avoir une ou plusieurs lignes de passage séparées par des joints annulaires intermédiaires (G5).

8. - Machine d'exploitation ou autre installation rotative comportant un distributeur rotatif fluidique selon une ou plusieurs des revendications précédentes 1 à 7.
